# EUROPÄISCHE PATENTSCHRIFT

(11) **EP 1 795 417 B1**
(45) Veröffentlichungstag und Bekanntmachung des Hinweises auf die Patenterteilung: **06.10.2010**
(21) Anmeldenummer: 06025658.3
(22) Anmeldetag: 12.12.2006
(51) Int. Cl.: B60T 8/40, B60T 7/04, B60T 13/74, B60T 7/06, B60T 11/18, B60T 8/88, B60T 17/22

(54) **Pedalarretierung**
Pedal lock
Blocage de pédale

(30) Priorität: 12.12.2005 DE 102005059609
(43) Veröffentlichungstag der Anmeldung: 13.06.2007
(73) Patentinhaber: IPGATE AG, 8044 Zürich (CH)
(72) Erfinder: Leiber, Heinz, 71739 Oberriexingen (DE); Leiber, Dr. Thomas, 81675 München (DE)
(74) Vertreter: Lenzing Gerber Stute

(56) Entgegenhaltungen:
- WO-A-2004/005095
- WO-A-2006/111393
- DE-A1- 3 723 916
- DE-A1- 19 549 626
- DE-A1-102005 018 649

## Beschreibung

Die vorliegende Erfindung betrifft eine Bremsanlage nach dem Oberbegriff des Anspruch 1.

### Stand der Technik

Das Dokument DE 102 30 865 A offenbart eine Bremsanlage mit den Merkmalen des Oberbegriffs des Anspruchs 1.

In der nachveröffentlichten WO 2006/111392 A ist ein System zur Druckmodulation und Bremskraftverstärkung beschrieben, in der Elektromotoren einen oder mehrere Kolben zur Druckerzeugung bei normalen Bremsvorgängen und zur Modulation für ABS antreiben.

Abhängig von der Auslegung des Leerhubes wirkt insbesondere bei niedrigen Regeldrücken der Kolben auf das Bremspedal oder deren Übertragungseinrichtung zurück, so dass der Fahrer die ABS-Funktion durch pulsierendes Pedal fühlt. Dies ist auch bei den meisten ABS- und ESP-Systemen der Fall, wenn die Rückförderpumpe das Druckmittel aus der Druckabsenkung wieder in den Hauptzylinder zurückpumpt. Diese Pedalbewegung ist unerwünscht.

Beim o.g. System kann dies durch entsprechend großen Leerhub vermieden werden. Dies ist aber nachteilig bei Ausfall des elektromotorischen Antriebs, da der Leerhub ein Durchfallen des Pedals bedeutet, bis die Pedalübertragungseinrichtung auf den Kolben triff. Außerdem schafft der um den Leerhub reduzierte Kolbenweg weniger Volumen zur Druckerzeugung in die Bremskreise.

### Aufgabe

Aufgabe der Erfindung ist ein System, aufbauend auf WO 2006/111392 A bereitzustellen, bei dem keine Pedalrückwirkung bei ABS-Betrieb entsteht und welches zugleich einen geringen Leerhub bei Ausfall des Motors oder der elektrischen Energieversorgung hat.

### Lösung der Aufgabe

Diese Aufgabe wird erfindungsgemäß mit einer Bremsanlage mit den Merkmalen des Anspruch 1 gelöst. Weitere vorteilhafte Ausgestaltungen der Bremsanlage nach Anspruch 1 ergeben sich durch die Merkmale der Unteransprüche.

Die Erfindung zeichnet sich insbesondere dadurch aus, dass das Mitnehmerelement, welches bei Ausfall des elektromotorischen Antriebs der erfindungsgemäßen Bremsanlage beim Betätigen des Bremspedals auf das mindestens eine Kolben-Zylinder-System einwirkt und den Kolben zwecks Druckaufbau in den Radbremsen verstellt, sich relativ zur Betätigungseinrichtung, bestehend aus dem Bremspedal und evtl. den die Bewegung des Bremspedals übertragenden Elementen, verstellen aber auch in einer bestimmten Position arretieren bzw. festsetzen läst. Im arretierten Zustand ist das Mitnehmerelement relativ zur Betätigungseinrichtung festgesetzt, so dass es den Bewegungen der Betätigungseinrichtung synchron folgt. Sofern die Arretierung aufgehoben bzw. freigeschaltet ist, kann das Mitnehmerelement sich relativ zur Betätigungseinrichtung für eine bestimmte Wegstrecke frei bewegen, so dass ein Verstellen des Mitnehmerelementes durch das Kolben-Zylinder-System nicht die Betätigungseinrichtung verstellt. Ein Kontakt zwischen dem Mitnehmerelement und des Kolbens kann immer dann auftreten, wenn sich der Abstand zwischen dem Mitnehmerelement und dem mittels der Antriebseinrichtung zurückfahrenden Kolbens verkleinert. Um nun in dieser Situation eine unerwünschte Bremspedalbewegung zu vermeiden kann die Arretierung mittels der Arretiervorrichtung gelöst werden.

Das Mitnehmerelement ist vorteilhaft auf einem Träger verschieblich gelagert und wird mittels einer Feder in Richtung der Arretierposition druckbeaufschlagt. Sofern das Kolben-Zylinder-System das entriegelte Mitnehmerelement entgegen der Federkraft aus der Arretierposition heraus verstell hat, wir das Mitnehmerelement aufgrund der Federkraft nach Freigabe durch das Kolben-Zylinder-System zurück in die Arretierposition verstellt. Die Arretierungsvorrichtung ist dabei vorteilhaft derart ausgebildet, dass ohne von außen zugeführte Energie die Arretierung automatisch erfolgt, sobald das Mitnehmerelement seine Arretierungsposition relativ zum Träger wieder erreicht hat. Die Arretiervorrichtung kann hierzu in einer bevorzugten Ausführungsform einen federbelasteten Anker aufweisen, welcher mittels der Feder in eine arretierende Stellung gedrückt wird.

Der Träger kann zwischen Bremspedal und einem Wegsimulator, welcher durch eine Federanordnung gebildet sein kann, angeordnet. Wirkt das Mitnehmerelement nur auf ein Kolben-Zylinder-System, kann das Mitnehmerelement lediglich mit einem Freiheitsgrad am Träger verschieblich gelagert sein. Sofern das Mitnehmerelement als doppelarmige Wippe zum Einwirken auf zwei Kolben-Zylinder-Systeme ausgebildet ist, ist die Wippe vorteilhaft zusätzlich drehbar bzw. verschwenkbar an dem Träger gelagert.

In einer bevorzugten Ausführungsform, ist eine den Träger umgreifende Hülse verschieblich am Träger gelagert, wobei die Arretiervorrichtung an der Hülse oder dem Träger angeordnet ist. An der Hülse ist das Mitnehmerelement je nach Ausgestaltung der Bremsanlage fest oder verschwenkbar angeordnet bzw. gelagert.

Nachfolgend wird eine mögliche Ausführungsform der erfindungsgemäßen Bremsanlage anhand von Zeichnungen näher erläutert.

Es zeigen:
- Fig. 1:: Grundaufbau der erfindungsgemäßen Bremsanlage;
- Fig. 2:: Druckausgleichselement zwischen den getrennten Bremskreisläufen;
- Fig. 3:: Detaildarstellung des verschieblich gelagerten Mitnehmerelementes mit Arretiervorrichtung;
- Fig. 4:: Bremsdruckverlauf und Bremspedalkraftverlauf.

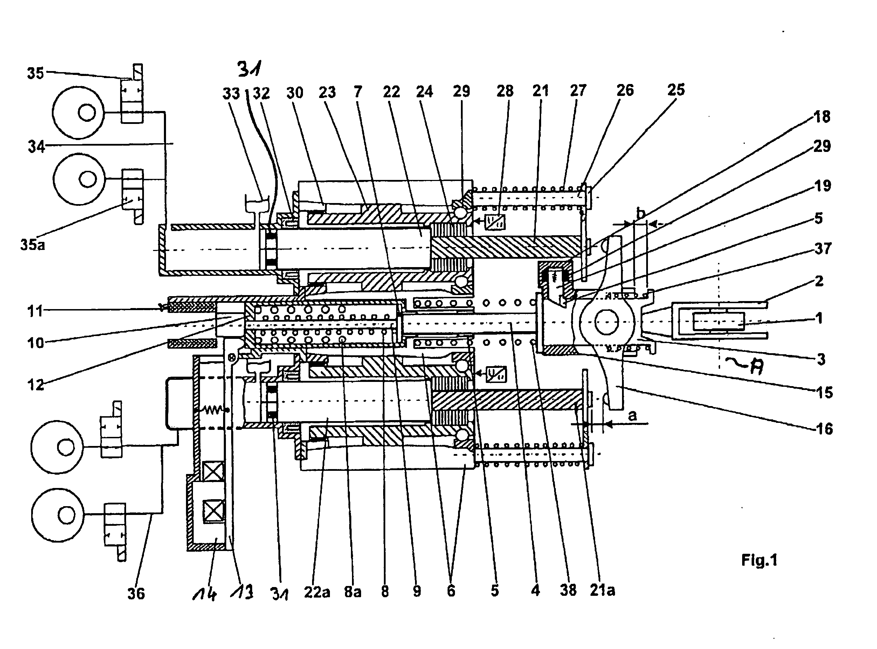

Die Fig. 1 entspricht im Grundaufbau den Fig. 9 und 10 der DE 10 2005 018 649.1. Das Bremspedal 1 ist in dem beweglichen Gabelstück 2 drehbar in der strichpunktierten Lagerachse A gelagert. Das Gabelstück 2 wirkt auf einen Träger 3, welcher in seiner axialen Fortsetzung als Lagerzapfen 4 ausgebildet und welcher über Lager 5 im Gehäuse 6 abgestützt ist. In der Fortsetzung wirkt ein Flansch 7 auf Wegsimulatorfedern 8 und 8a, wobei die innere Feder durch einen Zapfen 9 geführt ist. Dieser Zapfen trägt an seinem Ende ein Aktivierungselement 10 für den Sensor 11, welcher den Pedalhub erfasst. Flansch 7 und Zapfen 9 sind im Wegsimulatorgehäuse 12 gelagert. Dieses stützt sich mit seinem Boden auf dem Hebel 13 der elektromagnetischen Wegsimulatorarretierung ab. Der zugehörige Elektromagnet 14 bewirkt, dass im Normalfall der Pedalhub begrenzt wird, indem der Flansch 7 auf einem nicht gezeichneten Anschlag im Gehäuse 12 aufliegt oder die stärkere Feder 8a auf Block gedrückt wird. Bei Ausfall der Energieversorgung wird die Arretierung 13, 14 abgeschaltet oder auch bei Frontalcrash, damit das Pedal bei Crash nicht hart wirkt. Durch Abschalten der Arretierung kann das Wegsimulatorgehäuse 12 nach links vom durchgetretenen Pedal verschoben werden, wobei der nicht mehr arretierte Hebel 13 wegschwenkt und den Weg für das Gehäuse 12 frei macht. In diesem Fall werden die die Kolben antreibenden Elektromotoren auf vollen Druck geschaltet, wie später noch erläutert wird.

Im Träger 3 ist ein verschiebbarer Zwischenträger 15 gelagert, welcher das als Hebel 16 ausgebildete Mitnehmerelement mit Lagerzapfen und Magnetgehäuse 18 mit Anker 19 und Rückstellfeder 20 aufnimmt. Dies hat die Funktion einer elektromagnetschen Arretierung, welche auch elektromotorisch ausgebildet sein kann. Der Anker kann keilförmig oder zylindrisch gestaltet werden, um nach der Auslenkung über den Leerhub wieder sicher einzurasten. Auf der anderen Seite hat der Anker eine Schulter, welche nach der Bewegung s auf den Träger 3 auftrifft. Dies ist der Fall, wenn die Energieversorgung für die Elektromotoren ausfällt und die Pedalkraft über das Gabelstück 2, Träger 3, Zwischenträger 15 auf den Hebel und beidseitig auf die Spindel 21 und 21a und damit auch Kolben 22 und 22a übertragen wird. Der doppelarmige Hebel 16 ist notwendig, um unterschiedliche Kolbenhübe auszugleichen z. B. durch unterschiedliche Entlüftung oder bei Ausfall eines Elektromotors.

Nachfolgend wird der Bremsvorgang im einzelnen erläutert.

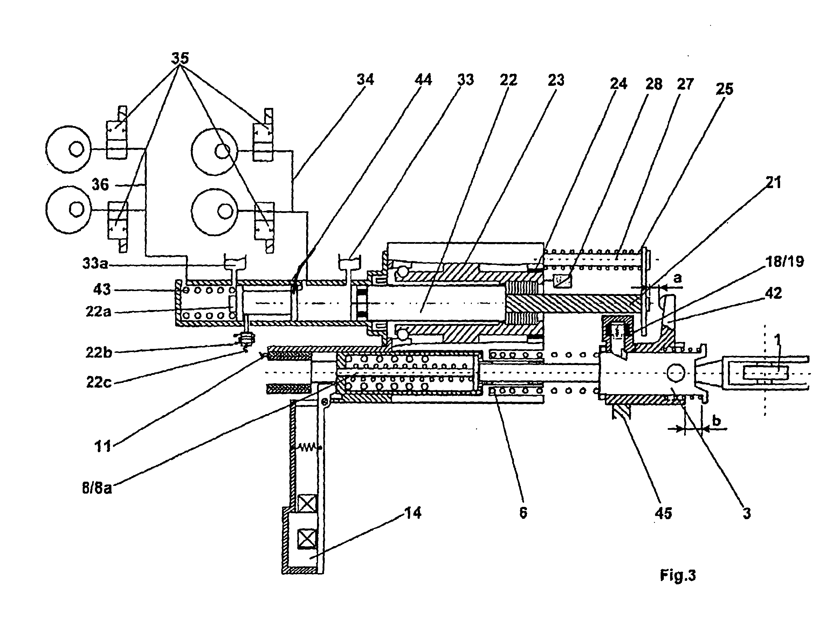

Über das Bremspedal 1 wird die Pedalkraft und der Pedalweg über Gabelstück 2 und Träger 3, Lagerzapfen 4 und Flansch 9 auf die Wegsimulatorfeder 8, bei geringerer Kraft und höherer Kraft auf 8a übertragen. Dadurch entsteht die bekannte Kraftrückwirkung. Der Pedalhub wird über den Sensor 11 gemessen. Entsprechend der Pedalcharakteristik, s. Fig. 3, wird vom Elektromotor über den Strom ein Drehmoment erzeugt, welches über die Spindel eine proportionale Kolbenkraft und damit Bremsdruck erzeugt. Beim Anlaufen des Motors oder bei Dynamik stimmt diese Weg-Druck-Zuordnung nicht. Daher wird vom Motor in zeitlichen Abständen die Druckvolumenkennlinie nach Fig. 3 gemessen. Der Motor wird dann weg- oder winkelgesteuert nach dieser Kennlinie p = f (V = s). Stimmt im eingeschwungenen Zustand die Zuordnung Weg zu Strom nicht, so erfolgt eine entsprechende Korrektur der Kennlinie.

Mit der Pedalbewegung erfolgt auch eine Bewegung das Hebels 16, welcher auf dem Zwischenträger 15 gelagert ist. Damit bei schneller Pedalbetätigung dieser Hebel nicht auf die Spindeln 21,21a trifft, ist ein kleiner Leerhub a vorgesehen. Dieser ist jedoch klein, da der EC-Motor sehr dynamisch mit kleiner Zeitkonstante reagiert. Fällt der EC-Motor aus, so überträgt der Hebel 16 die Pedalkraft auf die Spindel und damit Kolben. Die Steigung der Spindel ist dabei derart groß bemessen, dass keine Selbsthemmung vorliegt und der Kolben mit ausreichend kleiner Pedalkraft zum Druckaufbau verstellt werden kann. Im Normalfall, d.h. intakter Energieversorgung und funktionierenden Elektromotoren, ist der Kolbenweg vom Pedalhub entkoppelt. Dies hat den Vorteil, dass ein kleiner Kolbendurchmesser verwendet werden kann und das erforderliche Volumen durch größeren Kolbenweg geschaffen wird. Man spricht hier von einem Übersetzungssprung, der zur Folge hat, dass bei Ausfall der Elektromotoren kleinere Pedalkräfte als bei konventionellen Systemen ohne Entkopplung von Pedalweg und Kolbenweg notwendig sind.

Die Wegsimulator-Kraft-Weg-Charakteristik bestimmt damit die Druckerzeugung in den Bremskreisen. Die Verstärkung kann in weiten Bereichen variiert werden. Wirkt bei Hybridfahrzeugen der Generator zur Rekuperation als zusätzliche Bremswirkung, so wird die Verstärkung reduziert. Ist andererseits bei Fading in der Bremse die Fahrzeugabbremsung geringer, so wird die Verstärkung erhöht. Bei einer schnellen Pedalbewegung, z.B. bei Panikbremsung, kann die Verstärkung erhöht werden, damit der Bremsdruck schneller aufgebaut wird. Damit ist eine variable Pedalcharakteristik möglich.

Das Drehmoment des nicht näher ausgeführten Elektromotors wird über den Rotor 23 auf die mit dem Rotor drehfest verbundene Spindelmutter 24 übertragen. Damit bewegt sich die Spindel axial und wirkt auf den Kolben 22. Hierbei ist wichtig, dass die Spindel verdrehsicher gelagert ist. Dies erfolgt über einen mit der Spindel 21 verdrehfest verbundenen Hebel 25, der sich auf der Stange 26 abstützt und auf dieser axial gleitet. Es kann auch eine 180° versetzte Stange verwendet werden, um auch eine einseitige Krafteinwirkung der Spindelrückstellfeder 27 zu vermeiden. Die außerhalb der Spindel 21 oder des Kolbens 22 liegende Rückstellfeder 27 hat den Vorteil, dass der Kolbenraum nicht durch eine Feder in der Entlüftung beeinträchtigt ist.

Die Statoren der Elektromotoren sind in einem gemeinsamen Gehäuse 6 gelagert. Die EC-Motoren verwenden vorteilhaft zur genauen Regelung einen Drehwinkelgeber 28, welcher den Rotor 23 abtastet. Der Rotor 23 hat vorzugsweise im Bereich der Spindelmutter 24 wegen den Querkräften eine Wälzlagerung 29 und am anderen Ende eine Gleitlagerung 30. Der Plungerkolben 22 hat entsprechend dem Stand der Technik eine Primärdichtung 31 für den hohen Bremsdruck und eine Sekundärdichtung 32 gegen Vakuum. Die Bremsflüssigkeit gelangt vom Behälter 33 in die Kolbenkammer. Der Plungerkolben 22 überträgt den Bremsdruck 34 über die 2/2-Wege-Schaltventile zu den entsprechenden Radbremsen. Die Ventile 35, 35a ermöglichen durch entsprechende Ansteuerung des Plungerkolbens 22 unterschiedliche Druckniveaus in den Radbremsen. Diese sind nahezu drosselfrei, so dass die Druckaufbau- und -abbaugeschwindigkeit durch den Plungerkolben bzw. den Elektromotor bestimmt wird. Dies hat große regelungstechnische Vorteile, obwohl während der Regelung nicht gleichzeitig in beiden Bremsen Druck auf- und abgebaut werden kann. Es hat sich gezeigt, dass ein zeitversetzter Druckaufbau bzw. Druckabbau bei der erfindungsgemäßen Bremsanlage ausreichend ist. Der 2. Bremskreis 36 wird vom Kolben 22a bedient, welcher von einem eigenen Elektromotor verstellt wird.

Entsprechend den Stellbefehlen der ABS-Regelung erledigt der Kolben durch Zu- und Rückstellen die erforderliche Druckmodulation. Erfolgt nun die Druckmodulation bereits bei niedrigen Drücken, bei denen der Kolben einen kleinen Weg durchfahren hat, erfolgt über den Magnetanker 19 die Entriegelung, so dass bei weiterer Pedalbewegung der Zwischenträger 15 vom Träger 3 entkoppelt ist, indem dieser Zwischenträger 15 mit Hebel 16 über die Spindel 21 oder 21a gegen die schwache Feder 37 bewegt wird. Damit wirkt die Druckmodulation des Kolben-Zylinder-Systems nicht auf das Pedal 1. Für die Entriegelung des Magneten der Arretierungseinrichtung werden im Normalfall Pedalweg und Kobenweg miteinander verglichen. Liegen diese dicht beieinander im Bereich des Leerhubes, so erfolgt sofort eine Entriegelung. Erfolgt bereits bei kleinen oder beginnendem Pedalhub ein Regelsignal, z.B. Aquaplaning, so erfolgt sofort eine Entriegelung.

Erfolgt eine Zurückbewegung des Bremspedals, so stellt die Druckfeder 38 den Träger 3 mit allen angekoppelten Elementen zurück, und die Rückstellfeder 37 verschiebt den Zwischenträger 15 in die Ausgangs- bzw. Arretierungsstellung, so dass der Magnetanker 29 wieder einrastet.

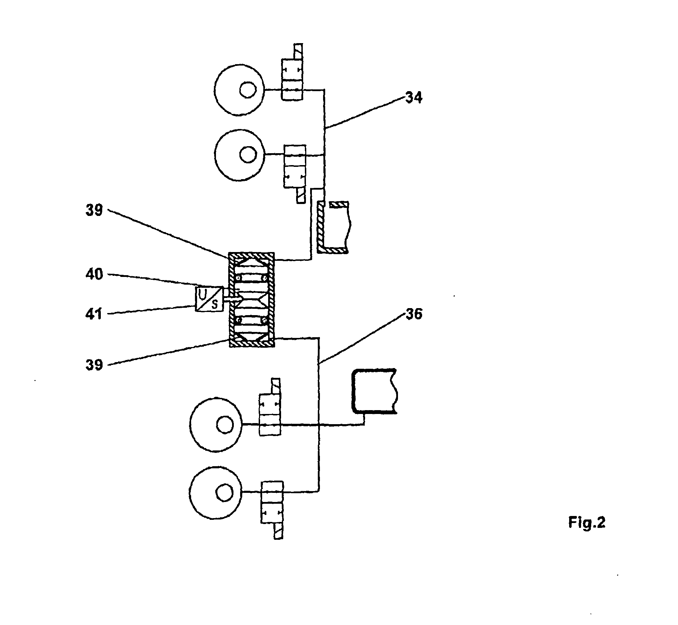

Die Fig. 2 zeigt einen mit Federn 39 vorgespannten Druckausgleichskolben 40 mit Wegsensor 41. Dieser ist mit beiden Bremskreisen verbunden. Dieser ist vorteilhaft bei diagonaler Bremskreisaufteilung, um ein angeglichenes Druckniveau in beiden Bremskreisen zu schaffen. Bewegt sich ein Kolben, so wird im schwächeren Kreis das Drehmoment des Elektromotors bzw. der Druck erhöht. Auch kann dieses Element bei konventionellen Bremsen verwendet werden, um eine Asymmetrie der Motorenmomente auszugleichen.

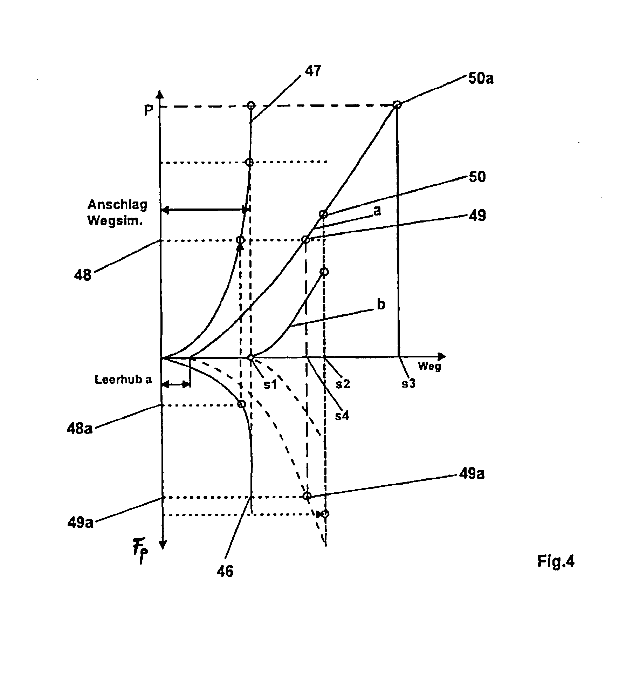

Die Fig. 3 zeigt eine Anordnung mit Tandemkolben, welche im Grundaufbau der Fig. 4 der DE 10 2005 018 649.1 entspricht. Insofern wird hiermit der Offenbarungsgehalt der DE 10 2005 018 649 vollumfänglich mit einbezogen. Die Grundelemente der Pedalkraftübertragung über Pedalhebel 1, Träger 3 und Wegsimulatorfeder 8, 8a und Sensor sind identisch zu Fig. 1. Ebenso die elektromagnetische Arretierung mit Magnetgehäuse 18 und Anker 19.

Im Gegensatz zu Fig. 1 trägt der Zwischenträger 3 keinen Hebel. Hier ist ein Mitnehmerelement 42 integriert, welches bei Ausfall des Elektromotors auf die Spindel 21 und Kolben 22 die Pedalkraft überträgt. Die Spindel wird vom Rotor 23 über Spindelmutter 24 angetrieben, der nicht ausgeführte Stator mit Spulen ist im Gehäuse 6 untergebracht. Die Position des Rotors und auch des Kolbens wird ebenso über einen Drehwinkelgeber 28 erfasst. Zwischen Mitnehmerelement 42 und Spindel 21 ist auch ein Leerhub a vorgesehen. Die Verdrehsicherung der Spindel geschieht wie in Fig. 1 beschrieben, ebenso deren Rückstellung durch die Feder. Bei Bewegung des Kolbens 22 befördert dieser die Bremsflüssigkeit aus dem Behälter 33 in den 1. Bremskreis 34. Diese Funktion entspricht dem konventionellen Tandem H2. Gleichzeitig wirkt der Druck auf den zweiten Kolben 22a, welcher von der Rückstellfeder auf den Anschlag 44 gedrückt wird. Der zweite Kolben entspricht mit seinen Dichtungen dem Stand der Technik, auch kann er zum ersten Kolben abgestuft sein.

Die Bremsflüssigkeit erhält der 2. Kolben aus dem Behälter 33 a für den Bremskreis 36. In beiden Bremskreisen sind, wie in Fig. 3 gezeigt, 2/2-Magnetventile eingebaut, welche dieselbe Funktion haben. Durch die zentrale Drucksteuerung über einen Elektromotor kann jeweils nur in einem Rad oder Regelkanal ein Druckauf- oder -abbau erfolgen. Die anderen Regelkanäle sind in dieser Phase auf Druckhalten geschaltet, d.h. die jeweiligen 2/2-Wege-Ventile sind geschlossen. Hierbei sind spezielle Verfahren eingesetzt, wie sie in der DE 10 2005 055751 des selben Anmelders beschrieben sind. Durch die Entkopplung von , Kolben und Pedalweg kann auch hier ein sog. Übersetzungssprung eingesetzt werden, damit kleinere Pedalkräfte bei Ausfall der Energieversorgung oder des Motors notwendig sind. In diesem Fall wird die Pedalkraft über den Mitnehmer 42 auf die Spindel übertragen. Hierbei entstehen Querkräfte auf den Träger 3, welche von einer Lagerung 45 abgestützt werden.

Bei Druckreduzierung kann im Kolbenraum von Bremskreis 34 ein Vakuum entstehen, was zur Bewegung des Kolben 22a durch die Rückstellfeder 43 führt. Um dies zu vermeiden, kann ein Elektromagnet 24b mit Rückstellfeder 22c eingesetzt werden, welcher in diesem Fall den Kolben 22a blockiert. Dies gilt nicht, wenn im Bremskreis 36 durch den Bremsregler Druck reduziert wird.

Die Fig. 4 zeigt verschiedene Kennlinien. Welche die Pedalkraft und Verstärkercharakteristik beschreiben. Die Kennlinien können nicht zusammenhängend brachtet werden, da eigentlich verschiedene Diagramme übereinander dargestellt sind. Die Kennlinien werden nachfolgend dennoch zusammengehörend beschreiben.

Kennlinie 46 zeigt die Pedalkraft in Funktion des Pedalwegs. Kennlinie 47 zeigt den Bremsdruck in Funktion der Pedalkraft. Arbeitspunkt 48a zeigt die Pedalkraft um den Blockierdruck 48 auf trockener Straße. Bei einem Weg s₁ erfolgt die Begrenzung des Pedalwegs durch den Anschlag bzw. die Arretierung des Wegsimulators. Diese Kurven gelten für intakte Verstärkung, d.h. Elektromotor und Energieversorgung. Kurve a zeigt den Kolbenweg als Funktion des Bremsdrucks. Dieser wirkt erst nach dem Leerhub a. Diese Kennlinie gilt auch als Druckvolumenkennline bei geg. Kolbenfläche. Sie ist von Bedeutung für die beschriebene Funktion des Elektromotors zur variablen pedalkraftabhängigen Druckverstärkung. Beim Weg s₂ wird der Pedalhub begrenzt, wenn die Arretierung des Wegsimulators ausgeschaltet ist. S₃ wird erreicht durch die beschriebene Entkopplung von Pedal- und Kolbenweg. Bei Ausfall der Energieversorgung wird z.B. der Blockierdruck 49 bei einem höheren Pedalweg s₄ und sehr hoher Pedalkraft 49a erreicht. Der maximale Druck, der jedoch sehr hohe Pedalkräfte erfordert, wird bei 50 erreicht. In der Regel wird auch entsprechend den gesetzlichen Vorschriften mit den Fuß- oder Pedalkräften bei weitem nicht die Blockiergrenze erreicht. Für den Normalfall intakter Verstärkung müssen jedoch höhere Drücke z.B. für Fading möglich sein. Dies wird erreicht, indem der Kolbenweg erst bei s₃ begrenzt wird und ein hohes Druckniveau 50a erreicht. Dies zeigt deutlich die Vorteile der Entkopplung von Pedalhub und Kolbenhub, was den sog. Übersetzungssprung beinhaltet. Normalerweise steigen die Pedalkräfte für den entsprechenden Druck bei Ausfall der Energieversorgung um den Faktor 5 an, was der Fahrer durch ein hartes Pedal spürt und ihn irritiert und nicht selten zu Unfällen führt. Dagegen kann durch den übersetzungssprung der Faktor auf 2,5 reduziert werden. Wie bereits beschrieben, kann das Mitnehmerelement elektromagnetisch arretiert bzw. freigegeben werden, wodurch der Leerhub vergrößerbar ist. Tritt nun der Fall ein, dass bei Regelung auf kleine µ die Energieversorgung ausfällt, so kann bis s₂ entsprechend der Kennlinie noch genügend Druck aufgebaut werden. Dieser Fall ist gleichzusetzen mit der Situation, dass bei Nachtfahrt Totalausfall des Bordnetzes und damit des Lichts eintritt. Dieser Fall wird durch entsprechende Sicherungselektrik und redundante elektrische Leitungen ausgeschaltet.

Das vorliegende Konzept erfüllt alle funktionalen Forderungen bei hoher Fehlersicherheit oder Backup-Funktionen für Ausfälle. Darüber hinaus ist durch schnelle und variable Druckänderungsgeschwindigkeiten ein hohes Potenzial zur Bremswegverkürzung vorhanden.

## Patentansprüche

1. Bremsanlage, eine Betätigungseinrichtung, insbesondere ein Bremspedal, und eine Steuer- und Regeleinrichtung aufweisend, wobei die Steuer- und Regeleinrichtung anhand der Bewegung und/oder Position der Betätigungseinrichtung eine elektromotorische Antriebsvorrichtung steuert, wobei die Antriebsvorrichtung einen Kolben eines Kolben-Zylinder-Systems über eine nicht-hydraulische Getriebevorrichtung verstellt, so dass sich im Arbeitsraum des Zylinders ein Druck einstellt, wobei der Arbeitsraum über eine Druckleitung mit mindestens einer Radbremse in Verbindung ist, **dadurch gekennzeichnet, dass** die Betätigungseinrichtung (1, 3) mechanisch mit einem Mitnehmerelement (16, 42) in Verbindung ist, wobei das Mitnehmerelement (16, 42) bei Ausfall der Antriebsvorrichtung beim Betätigen der Betätigungseinrichtung (1, 3) den Kolben (22) des Kolben-Zylinder-Systems verstellt, und mittels einer Arretierungsvorrichtung (18, 19, 29) das Mitnehmerelement (16, 42) zur synchronen Bewegung mit der Betätigungseinrichtung (1, 3) an dieser oder einem mit der Betätigungseinrichtung (1, 3) verbundenem Teil in zumindest einer Position arretierbar bzw. festsetzbar ist.

2. Bremsanlage nach Anspruch 1, **dadurch gekennzeichnet, dass** das Mitnehmerelement (16, 42) verschieblich und/oder verdrehbar an der Betätigungsvorrichtung (1) oder dem mit dieser verbundenem Teil (3, 15) gelagert ist und mit der Arretierungsvorrichtung (18, 19, 29) in zumindest einer Position arretierbar ist und bei Bedarf freigebbar bzw. freischaltbar ist, derart, **dass** es aus der arretierten Position heraus verschiebbar und/oder verschwenkbar ist.

3. Bremsanlage nach Anspruch 1 oder 2, **dadurch gekennzeichnet, dass** die Arretierungsvorrichtung (18, 19, 29) an dem Mitnehmerelement (16, 42) oder der Betätigungseinrichtung (1) oder dem mit der Betätigungseinrichtung verbundenem Teil (3, 15) angeordnet ist.

4. Bremsanlage nach Anspruch einem der vorhergehenden Ansprüche, **dadurch gekennzeichnet, dass** die Betätigungsvorrichtung, insbesondere das Bremspedal (1), über einen Hebelmechanismus einen Sensor (10, 11) betätigt, welcher ein Ist-Positions-Signal der Betätigungseinrichtung generiert, anhand dessen die Antriebsvorrichtung den Kolben verstellt und/oder die Arretierung mittels der Arretierungsvorrichtung freigibt.

5. Bremsanlage nach einem der vorhergehenden Ansprüche, **dadurch gekennzeichnet, dass** die Betätigungsvorrichtung auf eine Federanordnung (8, 8a, 12) zur Erzeugung einer Gegenkraft wirkt, wobei die Federanordnung insbesondere als sog. Wegsimulator wirkt und zwischen Federanordnung und Betätigungsvorrichtung ein Träger (3) angeordnet ist, an dem das Mitnehmerelement (16, 42) verschieblich und/oder verdrehbar gelagert ist.

6. Bremsanlage nach Anspruch 5, **dadurch gekennzeichnet, dass** auf dem Träger (3) eine Hülse (15) verschieblich gelagert ist, an der das Mitnehmerelement (16) insbesondere verdrehbar oder verschwenkbar gelagert ist.

7. Bremsanlage nach Anspruch 5 oder 6, **dadurch gekennzeichnet, dass** eine Feder (37) die Hülse (15) oder das Mitnehmerelement in Richtung der Arretierungsposition druckbeaufschlagt.

8. Bremsanlage nach Anspruch 7, **dadurch gekennzeichnet, dass** sich die Feder (37) mit ihrem einen Ende an dem Träger (37) abstützt.

9. Bremsanlage nach einem der Ansprüche 6 bis 8, **dadurch gekennzeichnet, dass** die Arretierungsvorrichtung an dem Mitnehmerelement oder an der Hülse angeordnet ist.

10. Bremsanlage nach einem der Ansprüche 6 bis 9, **dadurch gekennzeichnet, dass** die Arretierungsvorrichtung einen federbelasteten Anker aufweist, welcher mittels eines Elektromagneten entgegen der Federkraft in eine Position, welche insbesondere die entriegelte bzw. nicht arretierte Position ist, bewegbar ist.

11. Bremsanlage nach einem der Ansprüche 6 bis 10, **dadurch gekennzeichnet, dass** der Elektromagnet der Arretiervorrichtung ein Impulsmagnet mit reduziertem Haltestrom ist.

12. Bremsanlage nach einem der Ansprüche 6 bis 11, **dadurch gekennzeichnet, dass** der Träger einen Rücksprung aufweist, in den der Anker zur Arretierung des Mitnehmerelementes eingreift.

13. Bremsanlage nach einem der vorhergehenden Ansprüche, **dadurch gekennzeichnet, dass** die Steuereinrichtung den Zeitpunkt zum Lösen der Arretierung zumindest aufgrund der Kolbenposition bestimmt.

14. Bremsanlage nach einem der vorhergehenden Ansprüche, **dadurch gekennzeichnet, dass** die Steuereinrichtung den Zeitpunkt zum Lösen der Arretierung zumindest aufgrund der Kolbenposition und der Stellung der Betätigungseinrichtung bestimmt.

15. Bremsanlage nach einem der vorhergehenden Ansprüche, **dadurch gekennzeichnet, dass** die Arretierungsvorrichtung das Mitnehmerelement bei kleinen oder beginnendem Pedalhub, insbesondere bei Einschalten der ABS- und/oder ESP-Funktion freigibt.

16. Bremsanlage nach einem der vorhergehenden Ansprüche, **dadurch gekennzeichnet, dass** mittels der Arretierungsvorrichtung der Leerhub (b) zwischen Mitnehmer und Kolben-Zylinder-System variierbar ist.

17. Bremsanlage nach einem der vorhergehenden Ansprüche, **dadurch gekennzeichnet, dass** sich durch Freigeben der Arretierung der freie Weg des Kolbens, ohne das er die Betätigungseinrichtung verstellt, vergrößert.

18. Bremsanlage nach einem der vorhergehenden Ansprüche, **dadurch gekennzeichnet, dass** das Kolben-Zylinder-System eine Twin-Kolben-Einheit aufweist, wobei ein erster Kolben der Twin-Kolben-Einheit mechanisch mit der Antriebseinrichtung gekoppelt und der andere zweite Kolben hydraulisch mit dem ersten Kolben gekoppelt ist und beide Kolben in einem Zylinder angeordnet sind.

19. Bremsanlage nach einem der vorhergehenden Ansprüche 1 bis 17, **dadurch gekennzeichnet, dass** Kolben-Zylinder-Systeme von jeweils mindestens einem EC-Motor angetrieben sind.

20. Bremsanlage nach einem der vorhergehenden Ansprüche 1 bis 17, **dadurch gekennzeichnet, dass** ein Elektromotor zwei Kolben-Zylinder-Systeme verstellt, wobei jeweils ein Kolben-Zylinder-System mindestens einer, insbesondere zwei Radbremsen zugeordnet ist.

21. Bremsanlage nach einem der vorhergehenden Ansprüche, **dadurch gekennzeichnet, dass** der Wegsimulator mittels einer weiteren Arretierungseinrichtung (13, 14), die insbesondere einen Elektromagneten (14) aufweist, in einer Ausgangsposition festsetzbar ist.

22. Bremsanlage nach Anspruch 21, **dadurch gekennzeichnet, dass** der Weg der Betätigungseinrichtung (1, 3) durch die Arretierung des Wegsimulators (13, 14) in der Ausgangsposition begrenzt ist.

23. Bremsanlage nach Anspruch 21 oder 22, **dadurch gekennzeichnet, dass** die weitere Arretierungsvorrichtung (13, 14) das Gehäuse (12) des Wegsimulators (13, 14) bei einem Unfall, dem Ausfall der Energieversorgung oder dem Ausfall der Antriebsvorrichtung des Kolben-Zylinder-Systems freigibt.

24. Bremsanlage nach einem der Ansprüche 21 bis 23, **dadurch gekennzeichnet, dass** die Steuereinrichtung bei einem Frontalcrash die Abschaltung der Wegsimulatorarretierung aufhebt und mittels der mindestens einen Antriebseinrichtung und des mindestens einen Kolben-Zylinder-Systems zumindest in der Crashphase einen maximalen Bremsdruck einstellt.

25. Bremsanlage nach einem der vorhergehenden Ansprüche, **dadurch gekennzeichnet, dass** ein federbeaufschlagter Druckausgleichskolben (40) mit Sensor (41) oder Differenzdrucksensor vorgesehen ist, welcher unterschiedliche Motordrehmomente und Reibungen ausgleicht.

26. Bremsanlage nach einem der vorhergehenden Ansprüche, **dadurch gekennzeichnet, dass** die Bremskreise (34, 35) einen Druckgeber aufweisen.

27. Bremsanlage nach einem der vorhergehenden Ansprüche, **dadurch gekennzeichnet, dass** der Träger auf einer Lagerstelle (45) abgestützt ist (Fig. 3).

28. Bremsanlage nach einem der vorhergehenden Ansprüche, **dadurch gekennzeichnet, dass** die Antriebsvorrichtung den Kolben über einen Spindelantrieb verstellt, wobei der Spindelantrieb insbesondere ohne Selbsthemmung ausgebildet ist.

## Claims

1. Braking system, having an actuating device, in particular a brake pedal, and a control device, wherein the control device, by means of the movement and/or position of the actuating device, controls an electromotive drive device, wherein the drive device adjusts a piston of a piston cylinder system via a non-hydraulic gear device, so that a pressure is reached in the working chamber of the cylinder, wherein the working chamber is connected to at least one wheel brake via a pressure line, **characterised in that** the actuating device (1, 3) is mechanically connected to a driver element (16, 42), wherein if the drive device fails during actuation of the actuating device (1, 3) the driver element (16, 42) adjusts the piston (22) of the piston cylinder system, and by means of a locking device (18, 19, 29), the driver element (16, 42), to move synchronously with the actuating device (1, 3), can be locked or fixed in at least one position on this actuating device (1, 3) or on a part connected to the same.

2. Braking system according to Claim 1, **characterised in that** the driver element (16, 42) is mounted so that it can move and/or turn on the actuating device (1), or on the part (3, 15) connected to this, and can be locked with the locking device (18, 19, 29) in at least one position and when required can be released or unlocked in such a way that it can be moved and/or pivoted out of the locked position.

3. Braking system according to Claim 1 or 2, **characterised in that** the locking device (18, 19, 29) is arranged on the driver element (16, 42) or on the actuating device (1) or on the part (3, 15) connected to the actuating device.

4. Braking system according to any one of the preceding claims, **characterised in that** the actuating device, in particular the brake pedal (1), actuates a sensor (10, 11) via a lever mechanism, which generates an actual position signal of the actuating device, by means of which the drive device adjusts the piston and/or releases the locking by means of the locking device.

5. Braking system according to any one of the preceding claims, **characterised in that** the actuating device acts on a spring arrangement (8, 8a, 12) to produce a counterforce, wherein the spring arrangement in particular functions as a so-called travel simulator and a support (3) is arranged between spring arrangement and actuating device, on which the driver element (16, 42) is mounted so that it can move and/or turn.

6. Braking system according to Claim 5, **characterised in that** a sleeve (15) is mounted on the support (3) so that it can move, on which sleeve (15) the driver element (16) is mounted in particular so that it can turn or pivot.

7. Braking system according to Claim 5 or 6, **characterised in that** a spring (37) exerts pressure on the sleeve (15) or the driver element in the direction of the locking position.

8. Braking system according to Claim 7, **characterised in that** one end of the spring (37) is supported on the support (3).

9. Braking system according to any one of Claims 6 to 8, **characterised in that** the locking device is arranged on the driver element or on the sleeve.

10. Braking system according to any one of Claims 6 to 9, **characterised in that** the locking device has a spring-loaded anchor which can be moved by means of an electromagnet against the spring force into a position which in particular is the released or unlocked position.

11. Braking system according to any one of Claims 6 to 10, **characterised in that** the electromagnet of the locking device is an impulse magnet with reduced holding current.

12. Braking system according to any one of Claims 6 to 11, **characterised in that** the support has a recess into which the anchor engages to lock the driver element.

13. Braking system according to any one of the preceding claims, **characterised in that** the control device determines the moment to release the locking at least based on the piston position.

14. Braking system according to any one of the preceding claims, **characterised in that** the control device determines the moment to release the locking at least based on the piston position and the position of the actuating device.

15. Braking system according to any one of the preceding claims, **characterised in that** the locking device releases the driver element with a small or initiating pedal stroke, in particular by activating the ABS and/or ESP function.

16. Braking system according to any one of the preceding claims, **characterised in that** the idle stroke (b) can be varied between driver and piston cylinder system by means of the locking device.

17. Braking system according to any one of the preceding claims, **characterised in that** by releasing the locking the free travel of the piston is increased without it adjusting the actuating device.

18. Braking system according to any one of the preceding claims, **characterised in that** the piston cylinder system has a twin-piston unit, wherein a first piston of the twin-piston unit is mechanically coupled to the drive device and the other second piston is hydraulically coupled to the first piston and both pistons are arranged in a cylinder.

19. Braking system according to any one of Claims 1 to 17, **characterised in that** piston cylinder systems are driven by in each case at least one EC motor.

20. Braking system according to any one of Claims 1 to 17, **characterised in that** an electromotor adjusts two piston cylinder systems, wherein in each case a piston cylinder system is assigned to at least one, in particular two, wheel brakes.

21. Braking system according to any one of the preceding claims, **characterised in that** the travel simulator can be set in a starting position by means of another locking device (13, 14) which in particular has an electromagnet (14).

22. Braking system according to Claim 21, **characterised in that** the travel of the actuating device (1, 3) is limited by the locking of the travel simulator (13, 14) in the starting position.

23. Braking system according to Claim 21 or 22, **characterised in that** the other locking device (13, 14) releases the housing (12) of the travel simulator (13, 14) in the case of an accident, the failure of the energy supply or the failure of the drive device of the piston cylinder system.

24. Braking system according to any one of Claims 21 to 23, **characterised in that** in a frontal crash the control device overrides the switching-off of the travel simulator locking and sets a maximum brake pressure at least in the crash phase by means of the at least one drive device and the at least one piston cylinder system.

25. Braking system according to any one of the preceding claims, **characterised in that** a spring-loaded pressure compensation piston (40) is provided with sensor (41) or differential pressure sensor which compensates different engine torques and friction.

26. Braking system according to any one of the preceding claims, **characterised in that** the brake circuits (34, 35) have a pressure sensor.

27. Braking system according to any one of the preceding claims, **characterised in that** the support is supported on a bearing (45) (Fig. 3).

28. Braking system according to any one of the preceding claims, **characterised in that** the drive device adjusts the piston via a spindle drive, wherein the spindle drive is in particular formed without self-locking.

## Revendications

1. Installation de freinage, qui comprend un système d'actionnement, en particulier une pédale de frein, et un système de commande et de régulation, dans laquelle le système de commande et de régulation commande un dispositif d'entraînement à moteur électrique en se basant sur le mouvement et/ou la position du système d'actionnement, de sorte que le dispositif d'entraînement déplace un piston d'un système à piston-et-cylindre via un dispositif de transmission non hydraulique, de sorte qu'il s'établit une pression dans la chambre de travail du cylindre, ladite chambre de travail communicant avec au moins un frein de roue via une conduite sous pression, **caractérisée en ce que** le système actionnement (1, 3) est relié mécaniquement à un élément d'entraînement (16, 42), ledit élément d'entraînement (16, 42) déplaçant le piston (22) du système à piston-et-cylindre en cas de défaillance du dispositif d'entraînement lors de l'actionnement du système d'actionnement (1, 3), et l'élément d'entraînement (16, 42) est susceptible d'être arrêté ou immobilisé dans au moins une position, au moyen d'un dispositif d'arrêt (18, 19, 29), pour le déplacement synchrone avec le système actionnement (1, 3), sur celui-ci ou sur une partie reliée au système d'actionnement (1, 3).

2. Installation de freinage selon la revendication 1, **caractérisée en ce que** l'élément d'entraînement (16, 42) est monté avec possibilité de translation et/ou de rotation sur le dispositif d'actionnement (1) ou sur la partie (3, 15) reliée à celui-ci, et est susceptible d'être arrêté avec le dispositif d'arrêt (18, 19, 29) dans au moins une position et d'être libéré en cas de besoin, de telle manière qu'il peut être mis en translation et/ou en rotation à partir de la position arrêtée.

3. Installation de freinage selon la revendication 1 ou 2, **caractérisée en ce que** le dispositif d'arrêt (18, 19, 29) est agencé sur l'élément d'entraînement (16, 42) ou sur le système d'actionnement (1) ou encore sur la partie reliée au système d'actionnement (3, 15).

4. Installation de freinage selon l'une des revendications précédentes, **caractérisée en ce que** le dispositif d'actionnement, en particulier la pédale de freinage (1), actionne via un mécanisme à levier un capteur (10, 11) qui génère un signal de position réelle du système d'actionnement, au moyen duquel le dispositif d'entraînement déplace le piston et/ou libère l'arrêt au moyen du dispositif d'arrêt.

5. Installation de freinage selon l'une des revendications précédentes, **caractérisée en ce que** le dispositif d'actionnement agit sur un agencement à ressort (8, 8a, 12) pour engendrer une force antagoniste, l'agencement à ressort agissant en particulier à la manière de ce que l'on appelle un simulateur de course, et entre l'agencement à ressort et le dispositif d'actionnement est agencé un support (3) sur lequel l'élément d'entraînement (16, 42) est monté avec possibilité de translation et/ou de rotation.

6. Installation de freinage selon la revendication 5, **caractérisée en ce qu'**une douille (15) est montée en translation sur le support (3), sur laquelle l'élément d'entraînement (16) est monté en particulier avec possibilité de translation ou de rotation.

7. Installation de freinage selon la revendication 5 ou 6, **caractérisée en ce qu'**un ressort (37) sollicite en pression la douille (15) ou l'élément d'entraînement en direction de la position d'arrêt.

8. Installation de freinage selon la revendication 7, **caractérisée en ce que** le ressort (37) s'appuie par l'une de ses extrémités sur le support (37).

9. Installation de freinage selon l'une des revendications 6 à 8, **caractérisée en ce que** le dispositif d'arrêt est agencé sur l'élément d'entraînement ou sur la douille.

10. Installation de freinage selon l'une des revendications 6 à 9, **caractérisée en ce que** le dispositif d'arrêt comprend un induit chargé par ressort, qui est déplaçable au moyen d'un électroaimant à l'encontre de la force du ressort jusque dans une position, qui est en particulier la position déverrouillée, c'est-à-dire la position non arrêtée.

11. Installation de freinage selon l'une des revendications 6 à 10, **caractérisée en ce que** l'électroaimant du dispositif d'arrêt est un élément à impulsion avec courant de maintien réduit.

12. Installation de freinage selon l'une des revendications 6 à 11, **caractérisée en ce que** le support comporte un ressaut dans lequel s'engage l'induit pour arrêter l'élément d'entraînement.

13. Installation de freinage selon l'une des revendications précédentes, **caractérisée en ce que** le système de commande détermine l'instant pour annuler l'arrêt, au moins en se basant sur la position du piston.

14. Installation de freinage selon l'une des revendications précédentes, **caractérisée en ce que** le moyen de commande détermine l'instant pour annuler l'arrêt au moins en se basant sur la position du piston et sur la situation du système d'actionnement.

15. Installation de freinage selon l'une des revendications précédentes, **caractérisée en ce que** le dispositif d'arrêt libère l'élément d'entraînement lorsque la course de la pédale est faible ou commence, en particulier lors de l'enclenchement de la fonction ABS et/ou ESP.

16. Installation de freinage selon l'une des revendications précédentes, **caractérisée en ce que** la course à vide (b) entre l'élément d'entraînement et le système à piston-et-cylindre est variable au moyen du dispositif d'arrêt.

17. Installation de freinage selon l'une des revendications précédentes, **caractérisée en ce que** la course libre du piston augmente par annulation de l'arrêt, sans qu'il déplace le système d'actionnement.

18. Installation de freinage selon l'une des revendications précédentes, **caractérisée en ce que** le système à piston-et-cylindre comprend une unité à pistons jumelés, dans laquelle un premier piston de l'unité à pistons jumelés est couplée mécaniquement au système d'entraînement et l'autre second piston est couplé hydrauliquement au premier piston, et les deux pistons sont agencés dans un cylindre.

19. Installation de freinage selon l'une des revendications 1 à 17, **caractérisée en ce que** les systèmes à piston-et-cylindre sont entraînés respectivement par au moins un moteur EC.

20. Installation de freinage selon l'une des revendications 1 à 17, **caractérisée en ce qu'**un moteur électrique déplace deux systèmes à piston-et-cylindre, et dans lequel un système à piston-et-cylindre est associé respectivement à au moins un frein de roue et en particulier à deux freins de roues.

21. Installation de freinage selon l'une des revendications précédentes, **caractérisée en ce que** le simulateur de course est immobilisable au moyen d'un autre système d'arrêt (13, 14), qui comprend en particulier un électroaimant (14), dans une position de départ.

22. Installation de freinage selon la revendication 21, **caractérisée en ce que** la course du système d'actionnement (1, 3) est limitée par l'arrêt du simulateur de course (13, 14) dans la position de départ.

23. Installation de freinage selon la revendication 21 ou 22, **caractérisée en ce que** l'autre dispositif d'arrêt (13, 14) libère le boîtier (12) du simulateur de course (13, 14) en cas d'accident, lors de la défaillance de l'alimentation en énergie ou lors de la défaillance du dispositif d'entraînement du système à piston-et-cylindre.

24. Installation de freinage selon l'une des revendications 21 à 23, **caractérisée en ce que** le système de commande annule la coupure de l'arrêt du simulateur de course en cas de collision frontale et, au moyen dudit au moins un système d'entraînement et dudit au moins un système à piston-et-cylindres, il établit une pression de freinage maximum au moins dans la phase de collision.

25. Installation de freinage selon l'une des revendications précédentes, **caractérisée en ce qu'**il est prévu un piston de compensation de pression (40), chargé par ressort, avec un capteur (41) ou un capteur de pression différentielle, qui compense des couples de rotation moteur différents et des frictions différentes.

26. Installation de freinage selon l'une des revendications précédentes, **caractérisée en ce que** les circuits de freinage (34, 35) comprennent un émetteur de pression.

27. Installation de freinage selon l'une des revendications précédentes, **caractérisée en ce que** le support est soutenu sur un emplacement de montage (45) (figure 3).

28. Installation de freinage selon l'une des revendications précédentes, **caractérisée en ce que** le dispositif d'entraînement déplace le piston via un entraînement à broche, tel que l'entraînement à broche est réalisé en particulier sans auto blocage.
